# EUROPEAN PATENT SPECIFICATION

(11) **EP 3 605 071 B1**
(45) Date of publication and mention of the grant of the patent: **06.11.2024**
(21) Application number: 19198176.0
(22) Date of filing: 07.07.2011
(51) Int. Cl.: G01N 21/87, G01N 21/03

(54) **METHOD FOR ANALYZING A GEMSTONE**
VERFAHREN ZUR UNTERSUCHUNG EINES EDELSTEINS
PROCÉDÉ D'ANALYSE D'UNE PIERRE PRÉCIEUSE

(30) Priority: 07.07.2010 BE 201000411
(43) Date of publication of application: 05.02.2020
(62) Divisional of application: 11733638.8
(73) Proprietor: Octonus Finland Oy, 33100 Tampere (FI)
(72) Inventor: SIVOVOLENKO, Sergey, 33470 Ylöjärvi (FI)
(74) Representative: D'Halleweyn, Nele Veerle Trees Gertrudis

(56) References cited:
- EP-A1- 1 211 503
- WO-A1-2005/048764
- WO-A2-2007/023444
- WO-A2-2008/102361
- RU-C1- 2 054 656
- US-B2- 7 622 296
- DEETLEFS M ET AL: "Neoteric optical media for refractive index determination of gems and minerals", NEW JOURNAL OF CHEMISTRY, ROYAL SOCIETY OF CHEMISTRY, GB, vol. 30, 31 January 2006 (2006-01-31), pages 317 - 326, XP002484247, ISSN: 1144-0546, [retrieved on 20060131], DOI: 10.1039/B513451J
- LARSEN JR E S ET AL: "Ch. 3.3. Measurement of refractive index", 1 January 2004, INTERNATIONAL TABLES FOR CRYSTALLOGRAPHY. VOL. C. MATHEMATICAL, PHYSICAL AND CHEMICAL TABLES, KLUWER ACAD. PUBL, PAGE(S) 144, ISBN: 978-1-4020-1900-5, XP009101445

## Description

### FIELD OF THE INVENTION

The present invention relates to a method for analyzing a diamond, and in particular to a method for locating an inclusion in a diamond. More in particular the method is useful for accurately deriving the location and/or shape of an inclusion in a 3D model of the diamond. Embodiments of the invention are described herein with particular reference to modelling of diamonds. Moreover, the invention is applicable for both rough diamonds polished diamonds as well as semi-polished diamonds.

### BACKGROUND

The value of a cut diamond is determined to a significant extent by the four C's: cut, clarity, carat and colour. In addition to measuring weight, colour, size and cut, to evaluate the diamond, the inclusions must be located and their influence on the cost of the final brilliant must be minimized. The stone may have internal or external flaws or inclusions. Note that the terms "flaw", "inclusion" and "defect" are used as synonyms referring to a visually discernable irregularity inside the gemstone. There are various causes of inclusions, e.g. crystals of a foreign material, another crystal of the gemstone itself, or imperfections such as cracks which may appear whitish or cloudy. The clarity of a gemstone such as a diamond will depend on the number, size, colour, location, orientation and visibility of the inclusions. By locating and identifying inclusions within a rough (unpolished) gemstone, it is possible, in principle, to plan the cutting of the gemstone in such a manner as to minimize the impact of those inclusions upon the clarity of the final cut and polished stone.

The task of evaluating a diamond appears at almost all stages of the process from mining to selling. The choice of the evaluating method in a particular case depends on many factors. From the point of view of technique, historically the following methods may be distinguished:

### 1. Without polishing windows, without building 3D-models, without any immersion

A cutter looks through the loupe to a diamond, trying to sort out the inclusions and their numerous reflections. He counts, identifies and localizes the inclusions approximately, weighs the stone, determines its shape, crystal structure, colour and clarity. Next he mentally cuts off the flaw zones and decides what he can get from the residual diamond using just his experience. This is the way to prize the rough diamond. Such a method is typically used when buying rough diamonds, when observing a stone to make a first draft of its cut, as a basic method for evaluating small size rough diamonds, or appraise the finished brilliants.

### 2. With polishing windows, without building a 3D-model, without any immersion

The cutter first observes the stone, and then opens a number (typically two, but sometimes one window is sufficient) "windows" on opposite sides of the stone so that by looking through one of them he can see the inclusion against the background of the other window. According to a first possibility he draws a line which is meant as a trace of the sawing plane. Finally, looking through one of the windows, he matches front and back lines and makes sure that the inclusion is left in the certain, predicted area of the diamond. According to another possibility two dots are marked on the opposite surfaces of diamond. Each couple of dots marks the beginning and the end of the line which goes through the inclusion. The intersection of the lines displays the position of the inclusion. Such a method is typically used at the stage of checking before sawing, to specify the location of the inclusion by looking from the different points of view, to check the appeared flaws in the middle of the process.

### 3. With polishing windows, with 3D-models of the diamond, without any immersion

Typically, first a number of windows are polished in front of the inclusions. Note that in case of flat and smooth facets on the rough stone they may function as readily available windows. In a typical case, the windows must allow observing the inclusion(s) from at least two points of view (ideally orthogonal directions). Note however that for certain cases one window may be sufficient, see further. Next the stone is glued to a holder, mounted in a scanner and a 3D-model of the diamond is built. Further the process bifurcates depending on the used optics.

### a) using optical instruments with wide depth of field

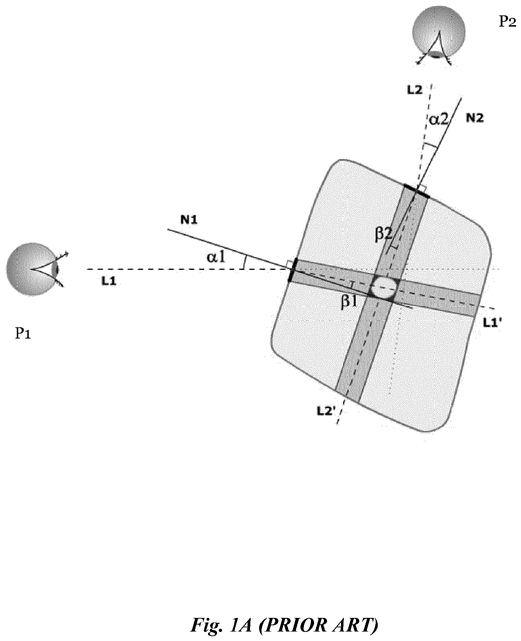

Working on the same holder, the inclusion is imaged from two (or more) sides as illustrated in figure 1A, see the viewing directions L1 and L2. Contours of the inclusion in the images represent the bases of so called "optical cylinders". Each cylinder extends between opposite locations on the outer surface of the stone in respective directions L1', L2'. The directions of the cylinders L1', L2' are calculated by the method of Snell's law, using the 3D-model of the diamond. The intersection body of the cylinders provides an approximate, usually accurate shape of the inclusion and its location. Such a method is disclosed in EP 1 211 503. An example of a suitable device for performing this method is the "Helium Rough" device produced by the applicant.

### b) using optical instruments with narrow depth of field

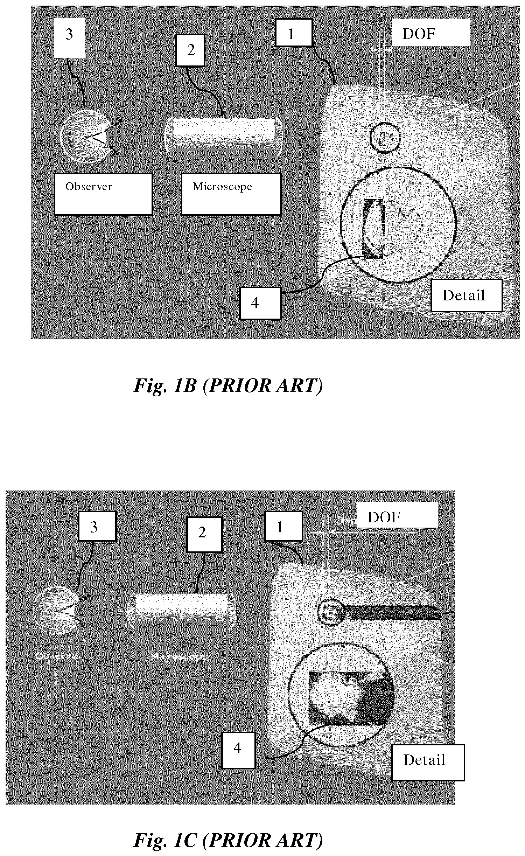

As in the method under a), the inclusion in a stone 1 is imaged by an observer 3 through a microscope 2 from one, two or more sides, but the angles α1 and α2 (figure 1B) must typically be less than 15° for an accurate result. In contrast to the method under a), each cylinder starts at the focusing point as illustrated in figures 1B and 1C. This allows to localize point inclusions from only one direction, and to determine accurately the inclusions of complicated form (even convex form) using just a few directions. Indeed, by using a microscope with a high magnification (low depth of field) the distance to a small inclusion can be derived relatively accurately from the distance between the lens and the focussing point, allowing the use of only one viewing direction for small inclusions. To increase the number of viewing directions additional freedoms for moving the stone are advantageous. This method is typically used for complex diamonds with a number of different types of inclusions. An example of a suitable device for performing this method is the "M-box" device produced by the applicant.

Figure 1B illustrates the method used for a point inclusion, where a cylinder 4 begins at the focusing point and extends over a distance equal to the depth of field (DOF) in the viewing direction. The real shape of the inclusion is indicated with a dashed line, and it will be clear that the method of figure 1B will not give an accurate result for such an inclusion. Figure 1C illustrates the method used for larger inclusions where a cylinder 4 begins at the focusing point and extends in the viewing direction to the outer surface of the diamond. This method will give good results for the illustrated inclusion. Figures 1B and 1C show only one cylinder, but typically at least two cylinders are used, such that the shape and location of the inclusion can be determined by intersecting the at least two cylinders. Sometimes, for example in case of "cloud", i.e. a number of small inclusions close to each other, only one direction of observation is sufficient to localize the cloud by focusing to each of the point inclusions of the cloud step by step.

### 4. Without windows, with/or without 3D-models of the diamond, using an immersion liquid.

A diamond is glued to the holder and submerged in an immersion solution with the same refractive index as diamond. As a result, the diamond "disappears", but any inclusions remain visible. The stone in the immersion liquid is rotated and 2D images are obtained from a plurality of different viewing directions to determine a complete 3D-model of the inclusion(s). An example of such a method is disclosed in US 4,049,350 and in WO 2008/102361. WO 2008/102361 further mentions immersion of the stone in a solid material using infrared light and rotation scanning for determining the location of an inclusion.

In practice, often at the same technological operation different, both traditional and modern methods may be used. For important cases, a stone will typically be checked by eye (by method 2) marking lines, wherein the stone has already been made automatically analyzed by any of the modern methods (3 or 4). To do such an eye check, it usually is necessary to open (polish) windows on opposite sides of the stone, and to look through both windows to make sure that the marking (sawing) line goes through the inclusion.

It is an object of the present invention to provide an improved method for analyzing a rough, semi-polished or polished diamond, in particular for determining the position of an inclusion in a diamond, for the purpose of e.g. evaluation, planning, cutting and/or virtual viewing.

### SUMMARY OF THE INVENTION

According to an embodiment of the invention there is provided a method for analyzing a diamond according to claim 1 and a diamond taken up in a solid block of solid transparent material according to claim 13. In the following, the term gemstone is used to illustrate the embodiments, while the claimed invention is limited to the analysis of a diamond.

By immersing the gemstone in a solid block it is not necessary to polish out windows in the gemstone itself, avoiding the risk that volume of the potential polished stone is decreased. This also means that after examination if the gemstone is under pre-purchase consideration and is rejected based on the inclusion evaluation, the gemstone can be removed from the transparent material and returned to its owner.

Further the method will allow to use all the traditional analyzing methods (see methods 1-4 described in the background section) in an improved way. Note that the solid block can be given any suitable shape (from the start or by additional polishing) in order to provide a good visibility of all areas of the diamond from one, two or more directions. Further, the use of a solid transparent material around the gemstone will facilitate the cutting process: the gemstone may be cut whilst remaining in the solid immersion material, together with the solid immersion material. Also, the planning marks may be put on the surface of the solid immersion material, avoiding marking lines on the surface of the gemstone. Further, visible range rays can be used for lighting the solid block with the gemstone inside. This allows the use of the same visible range optic devices as currently used in diamond industry for determining inclusions.

According to a preferred embodiment there is provided a method for locating an inclusion in a diamond, wherein the inclusion is visualized using light rays in the visible spectrum through a surface of the transparent block and wherein the position of the inclusion is determined using computer means. Typically a 3D model of the gemstone will be obtained before immersing the stone, and this 3D model will then be used in the calculations.

According to a preferred embodiment the gemstone is fixed on a holder, and the immersion material is applied whilst the gemstone remains fixed on the holder. This will allow to first scan the gemstone on the holder to obtain a 3D model of the outer surface in a pre-determined coordinate system, and next obtain a 3D model of the outer surface of the solid block in the same coordinate system. Also the holder with the solid block can then simply be transferred to the different devices used in the analyzing and/or cutting process.

According to another embodiment a number of morphological features of the gemstone are determined before the gemstone is taken up in the transparent solid block, and a number of reference points are chosen using the determined morphological details. After taking up of the gemstone in the solid block the same morphological features and associated reference points are looked up so that any analyzing done before including the stone in the immersion material can be matched to the analyzing done whilst the gemstone is contained in the solid block. To determine the morphological features a number of high magnification photographs may be used. Using such a method it is not necessary to fix the gemstone on a table or in a holder as in the previous embodiment.

According to a preferred embodiment the solid block is formed or polished with at least two flat surfaces. The solid block can for example be formed or polished with a prism shape, in particular a rectangular cuboid shape. Also, the solid block may be polished in order to obtain one or more improved facets for analyzing the gemstone. Further, the solid block may be polished such that a polished window is opposite a matt outer surface. This has the advantage that a homogeneous background is created for the view through the polished window. According to another advantageous embodiment the solid block is polished or shaped with a shape similar to the shape of the gemstone but with a number of flat surfaces. In such an embodiment the shape of the solid block can be such that the distance between the outer surface of the gemstone and the outer surface of the solid block lies within a predetermined range. Note that it is advantageous to reduce the distance between the gemstone and the outer surface of the solid block in order to reduce absorption and to obtain a better brightness when the gemstone is analyzed using light rays in the visible spectrum.

According to a preferred embodiment the solid transparent material has a refractive index RIs similar to the refractive index RIg of the gemstone, wherein preferably RIg - 0,1 < RIs < RIg + 0,1, and most preferably RIg - 0,01 < RIs < RIg + 0,01.

According to a preferred embodiment the solid material has a transparency for a predetermined segment of visible light, between 5 and 70%, preferably between 30 and 70% and more preferably between 40 and 70%.

According to an embodiment of the method of the invention, before covering the gemstone with the transparent material, a 3D model of the outer surface of the gemstone is obtained relative to a coordinate system. After covering the gemstone with the transparent material, optionally the solid block is polished. Next a 3D model of the outer surface of the (optionally polished) solid block of transparent material is obtained relative to said coordinate system. According to a preferred embodiment, the analyzing comprises observing the inclusion through at least one facet of the solid block and obtaining at least one 2D image of said inclusion as seen through said at least one facet; and determining the location of the inclusion using said at least one image of the inclusion, the 3D model of the gemstone and the 3D model of the solid block. Preferably the analyzing comprises observing the inclusion through 2 or more facets.

According to a preferred embodiment the solid block is formed or polished with at least a first and a second surface through which an inclusion can be seen, wherein the analyzing comprises:
- observing the inclusion through the first surface of the solid block and obtaining a first 2D image of said inclusion as seen through said first surface;
- observing said inclusion through the second surface of the solid block and obtaining a second 2D image of said inclusion as seen through said second surface;
- determining a first optical cylinder using a first contour of said first image of the inclusion and a second optical cylinder using a second contour of said second image of the inclusion;
- using the intersection of the first and second optical cylinder to determine the location and/or shape of the inclusion.

Typically, before covering the gemstone with the transparent material, a 3D model of the outer surface of the gemstone is obtained relative to a coordinate system, and the location of the first and second surface of the solid block is determined relative to the same coordinate system. More in particular it will be advantageous to also build a 3D model of the solid block relative to the same coordinate system. The 3D model of the outer surface of the gemstone, the location of the first and second surface (or the 3D model) of the solid block, as well as the angle of incidence of the light rays and the refractive index of the solid immersion material can then also be used for determining the axial direction of first and second optical cylinder by applying the well known optical laws.

According to a possible embodiment a focusing function is used for obtaining the first and second 2D images of the inclusion, wherein the first 2D image is obtained whilst observing the inclusion in a first direction and focusing in a first focusing point and the second 2D image is obtained whilst observing the inclusion in a second direction and focusing in a second focusing point; wherein the first optical cylinder starts from an end surface containing the first focusing point and extends in the first axial direction, typically calculated using the location of the first surface; and wherein the second optical cylinder starts from an end surface containing the second focusing point and extends in a second axial direction, typically calculated using the location of the second surface.

As explained in the section above about the state of the art, if an optical instrument with narrow depth of field is used, it is possible to localize point inclusions from only one direction, and to determine accurately inclusions of complicated form (even convex form). For larger defects it is also possible to focus step by step on different portions of the defect to build a 3D model of the defect.

According to a preferred embodiment the gemstone is any one of the following: a rough diamond, a polished diamond, a semi-polished diamond.

According to a preferred embodiment the analyzing comprises marking the surface of the solid block providing indications for the cutting process and cutting the solid block using the markings on the surface.

According to a preferred embodiment a 2D image of the solid block is obtained, wherein the one or more inclusions are looked up in the 2D image of the solid block using an automated algorithm based on light/dark differences and/or based on the sharpness of the inclusions boundaries. This sharpness typically depends on focusing plane position: an inclusion will only have a sharp boundary when the inclusion is inside the depth of field.

According to a preferred embodiment the immersion material is an arsenic-sulphide composition, optionally alloyed with selenium or iodine, such as the arsenic sulphides (As(X)S(Y)), or arsenic sulphide iodides (As(X)S(Y)I(Z)), or arsenic sulphides containing iodine (As(X)S(Y)+(Z)%I), and for example As₂S₉, As₂S₉+3%I, As₂S₁₀, As₂S₅+8%I, As₃₀S₄₆I₂₄, or a combination thereof.

The gemstone is diamond, and the immersion material is a material belonging to the class of glasses with RI = 2,42 +/- 0,3, more preferably 2,42 +/- 0,1, and most preferably RI = 2,42 +/- 0,01.

According to a preferred embodiment the gemstone, whilst being analyzed, is heated up to a temperature below the melting temperature to decrease the inner tensions inside the solid immersion material. According to a possible embodiment thereof, the gemstone is analyzed with an optical device containing an infra-red heater for the heating of the solid block.

According to a preferred embodiment the solid transparent block is included in a container, in particular a cuvette, which is transparent in a segment of the visible spectrum or in a segment of the infrared spectrum. The analyzing is done through one or more walls of said container or cuvette whilst the solid transparent block is in the container. Including and analyzing the solid transparent block in a transparent container has the advantage that there can be chosen a suitable container with suitable facets and that no polishing of the transparent block is needed to obtain good facets. Further such a container can be easily cleaned before and during the analyzing which facilitates manipulation.

According to a preferred embodiment the melting or plasticizing of the solid immersion material is done in the container or cuvette, e.g. in an inert atmosphere such as Argon at a temperature of 195_-/+ 30 degrees Celsius depending on the selection of immersion glass material. Typically, the solid immersion material and the gemstone are placed in the container whereupon this assembly is heated to melt and immerse the gemstone in the immersion material and to obtain a good wetted connecting interface between the immersion material with the gemstone and the container. According to a preferred embodiment the assembly of the container with immersion material and gemstone is not cooled to room temperature but is kept at a higher temperature (but below the glass transition temperature) to avoid cracking of the glass. This may e.g. be achieved by providing the cuvette with an additional heating means, see further.

According to a preferred embodiment the container is manufactured of a quartz material. Such a material has the advantage that it has a relatively high heating coefficient.

According to preferred embodiment the container is a glass cuvette, e.g. a quartz cuvette, an IR quartz cuvette, an UV quartz cuvette.

According to a possible embodiment the container is heated during step of cooling (i.e. during the step of allowing the immersion material to become solid) and during the further analyzing to avoid that the container or the immersion material cracks during cooling. Note that this is only an option and that such a step will typically not be included if the immersion material does not crack during the solidifying step. According to a possible embodiment the container is provided with a heating means. However, according to other embodiments the heating may be performed by external means, such as circulating warm air, infrared heating, etc.

According to a possible embodiment the heating means may comprise an electrically conductive coating applied on the container or cuvette. This coating is typically at least transparent in a segment of the visible spectrum or in a segment of the infrared spectrum. Such a coating allows for a good heating of the immersion material. The coating is preferably manufactured from an Indium-Tin-Oxide material, but the skilled person will understand that other electrically conductive, optically transparent coatings may also be used. The coating preferably has a layer thickness which is less than 10 micron, preferably less than 3 micron, and most preferably less than 2 micron, and e.g. approximately 1 micron. In that way the refractive index of the coating material will not influence the optical paths in significant way and need not be taken into account. The coating may be applied on the inner surface and/or on the outer surface of the container. The coating may e.g. be applied by vacuum sputtering. Commercially available suitable coating materials include e.g. the ITO coating from Ocean Thin Films which is normally used for defrosting and maintaining LCD displays.

According to another variant the heating means may comprise one or more heating wires which may be arranged in or near the container.

By providing a heating means in the container it is possible to obtain an improved heating of the immersion material and a good interface between the container and the immersion material. Further the heating means may be used to heat the assembly of the container and transparent block during the analyzing.

According to a possible embodiment the gemstone fixed on a holder is included in the immersion material in the container. In such a case the holder may also be provided with a heating means. Alternatively the holder may be in contact with the coating so that it is also heated when heating the cuvette. In that way the holder can also be heated to avoid heat dissipation from the cuvette through the holder if the holder is inside the immersion material.

According to a preferred embodiment the container or cuvette has a polygonal shape with an open top, in particular a prism shape such as a beam shape, an octahedron shape or a pyramid shape. Such a polygonal shape has a plurality of edges, and one or more heating wires may be arranged at or near one or more of said plurality of edges. If the container or cuvette has a bottom, one or more heating wires may be provided at or near the bottom.

The invention also relates to a container or cuvette made of a material which is at least transparent in a segment of the visible spectrum or in a segment of the infrared spectrum, wherein said container or cuvette comprises a gemstone covered by a transparent solid material, which solid transparent material is adhered to the container or cuvette, in particular for use in an embodiment of the method of the invention. The container may have any one or more of the above disclosed features.

### BRIEF DESCRIPTION OF THE DRAWINGS

The invention will be further elucidated on the basis of a number of non-limitative exemplary embodiments of the method of the invention, with reference to the accompanying drawings.
Figures 1A-1C illustrate schematically three methods of the prior art;
Figures 2A-2F illustrate schematically an exemplary embodiment of the method of the invention;
Figure 3 illustrates schematically a detailed embodiment for calculating optical cylinders in the method of the invention;
Figure 4A and 4B illustrate the influence of the refractive index of the immersion material on the view of the gemstone;
Figures 5A and 5B are photographs of a diamond before and after being taken up in a solid transparent block, respectively;
Figure 6 illustrates a possible embodiment of a gemstone encased in a solid immersion material;
Figure 7 illustrates a further embodiment of the invention where a gemstone is encased in a solid immersion material which is included in a cuvette;
Figure 8 illustrates a number of possible embodiments of cuvettes according to the invention.

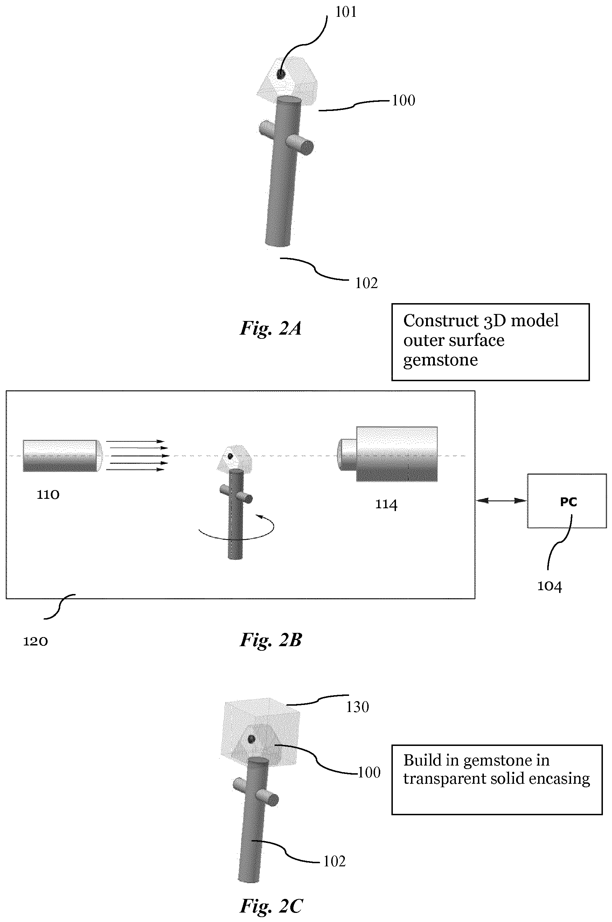

According to an exemplary embodiment of the method of the invention illustrated in figures 2A-2F, the method comprises the following steps.

In a first step a gemstone 100 is glued on a holder 102, see figure 2A. In a second step the gemstone 100 is measured (scanned) to construct a three dimensional (3D) model of the exterior surface of the gemstone 100. Referring to figure 2B there is shown a gemstone imaging apparatus 120 comprising the holder 102 upon which the gemstone 100 is fixed; a light source 110; and an imaging device 114 such as a digital camera. The holder 102 is typically capable of rotating and/or translating in order to reposition the gemstone 100 relative to the light source 110 and the imaging device 114. The imaging apparatus 102 is communicating with a computer 104. More in particular, the computer 104 can control the holder 102 and the imaging device 114 in order to receive images of the gemstone 100 in different positions thereof. While not shown in figure 2B, the imaging or scanning apparatus 120 may include additional components for performing additional measurements of the gemstone 100. Various scanning apparatuses generally suitable for use with the present invention are known in the prior art.

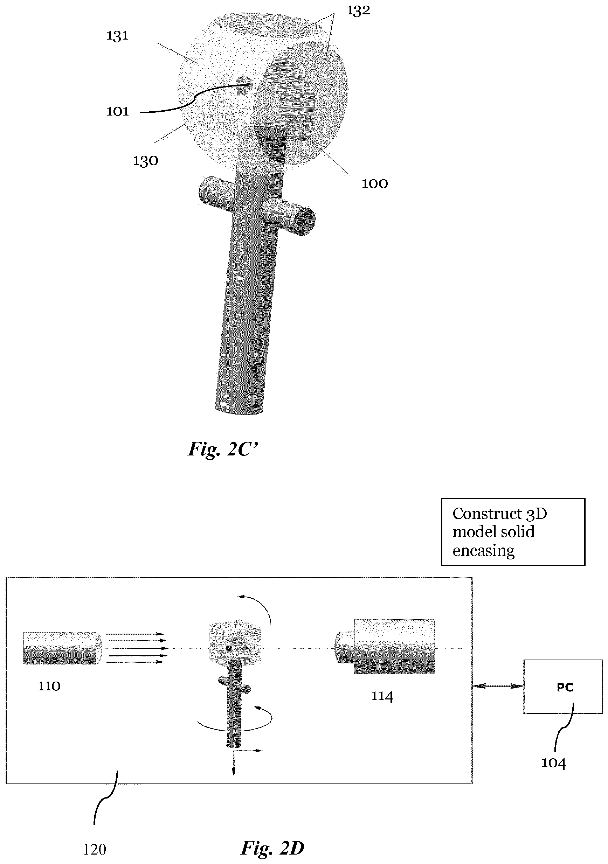

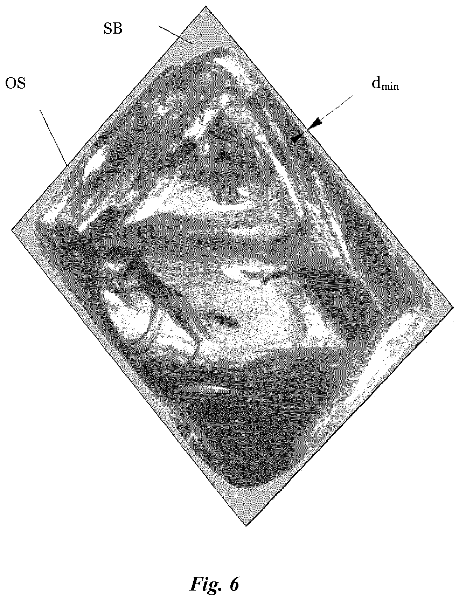

In a third step illustrated in figure 2C, the stone 100 on the holder 102 is immersed in a liquid material suitable for forming a transparent solid encasing around the stone. The liquid glassy material is then cooled to form a transparent solid body around the stone. The information about the location of the diamond inside the solid material can e.g. be kept either by the holder or by special marks put on the sides of the solid immersion beforehand. After solidification of the preformed molten medium and, optionally, after further polishing, the medium can have the form of a cube, an octahedron, or other forms similar (or approximately equidistant) to that of the diamond with well-polished sides. An example of an octahedron shape similar to that of the original diamond is illustrated in figure 6. The solid immersion material SI is shaped with an outer surface OS in the form of an octahedron. A small distance dₘᵢₙ between the solid immersion polished side plane and the surface of the diamond provides a better contrast and brightness of the inclusion thanks to minimizing the light scattering in the small layer of the immersion.

Note that the 3D model of the outer surface of the stone has been determined with respect to the holder and that the shape of the encasing with respect to the holder is known or can be determined, such that a 3D model of the outer surface of solid encasing can be built on the same coordinate basis as the coordinate basis used for the 3D model of the gemstone. According to a possible embodiment illustrated in figure 2D a scan of the outer surface of the solid block 130 is performed in order to build a 3D model of the solid block on the same coordinate basis as the coordinate basis used for the 3D model of the gemstone. Using these two 3D models and the refractive indexes of the material of the gemstone and of the solid encasing the light paths within the solid block can be calculated.

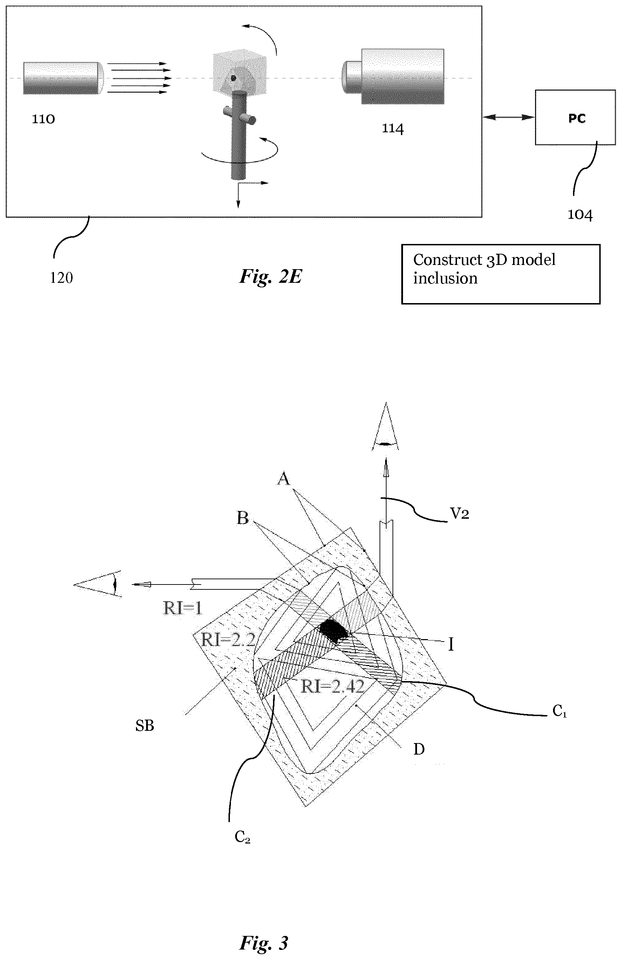

Preferably, the solid block 130 applied around the diamond by immersion has a number of flat surfaces through which the diamond can be observed, and can e.g. have the shape of a prism, such as a rectangular cube. According to another possibility the solid block may have a shape which is similar to the shape of the gemstone inside but has a number of flat surfaces, see e.g. figure 3. More in particular the shape of the solid block could be such that the distance between the outer surface of the gemstone and the outer surface of the solid block lies within a certain range. Note that it is possible to change the shape of the solid block e.g. by polishing, and that is e.g. possible to add additional facets to the solid block for an improved viewing of the inclusions, and this without removing valuable gemstone material. This is illustrated in figure 2C'. In the illustrated embodiment two windows 132 are polished on the solid block 130. In such an embodiment the steps illustrated in figures 2D and E will of course be performed on the solid block 130 after polishing the windows 132. Further, it may be advantageous to combine a matt surface 131 with one or more views through polished surfaces 132. Polished windows may e.g. be used to find and build inclusions, wherein a matt surface has the advantage of creating a homogeneous background for the view through the polished windows 132. In other words, in certain cases, it may be advantageous to make sure that there is a matt surface 131 opposite a polished window 132.

Preferably the casing 130 should be transparent in a part of the visible spectrum, with a transparency of between 5 and 70%, preferably between 40 and 70 %. This will allow the use of the currently available cameras. Such a suitable material will typically be a glassy material with a refractive index similar to the refractive index of the gemstone in the solid state thereof. For diamond, the RI of the glassy material is 2.42 +/-0,3, and more preferably 2,42 +/- 0.1, and most preferably 2,42 +/- 0,01.

Examples of suitable materials are arsenic-sulphide compositions, preferably alloyed with Selenium or Iodine, e.g. arsenic sulphides (As(X)S(Y)), arsenic sulphide iodides (As(X)S(Y)I(Z)) or arsenic sulphides containing iodine (As(X)S(Y)+(Z)%I). More in particular, examples are As₂S₉, As₂S₉+3%I, As₂S₁₀, As₂S₅+8%I, As₃₀S₄₆I₂₄, or a combination thereof. The skilled person will understand that the values of X, Y and Z in the formulas given above can be optimized to obtain a suitable refractive index in the solid state and suitable thermal expansion and plasticity properties. Preferably, the material has a low melting point (e.g. about 200-300°C). Further, preferably, the material has a coefficient of the thermal expansion (CTE) close to that of the gemstone and/or a plasticity which is sufficiently high to avoid cracking after solidification at room temperature.

For diamond, the immersion material is a material belonging to the class of glasses with RI = 2,42 +\- 0,3, more preferably, 2,42 +/- 0,1, and most preferably 2,42 +/- 0,01. In particular, the arsenic-sulphides alloyed by selenium or iodine may be used, optionally heated up to the temperature close to the point at which the material is about to soften, but still solid. Heating the material slightly whilst keeping a solid immersion body will decrease drastically the inner tensions inside the solid immersion material. This will allow avoiding knags and cracks, which could appear because of the difference in thermal expansion coefficient between diamond and the solid immersion material. The solid immersion materials mentioned above are not toxic at such temperatures (typically about 60°C), and the temperature still allows the use of the currently available optical devices which may be slightly modified by adding a small standard infra-red heater for obtaining those increased temperatures.

In a further step illustrated in figure 2D, the glass block 130 in which the gemstone 100 is taken up, is placed in an imaging apparatus 120 for determining the location of the inclusion in the gemstone. More preferably, a scanning apparatus of the general type disclosed in EP 1 211 503 may be utilized in embodiments of the present invention. Possible methods use optical cylinders and are similar to the methods of the prior art illustrated in figures 1A-C. If the RI of the material of the solid block is identical the RI of the gemstone, it is possible to simply use the methods illustrated in figures 1A-C with this difference that the 3D model to be used is the 3D model of the solid block and not the 3D model of the diamond.

If the RI of the material of the solid block is different to the RI of the gemstone, the method is slightly more complex as illustrated in figure 3. More in particular, both the outer surface A of the solid block SB and the outer surface B of the gemstone D need to taken into account to calculate the trace of the beam between an inclusion I and an observer O. The coordinates of the surface are known from the 3D-models which are determined as explained above. Further, figure 3 shows in detail how to build the shape of the inclusion by intersecting optical cylinders C1, C2. In the case of a narrow depth-of-field apparatus (cf. figures 1B and 1C) the cylinders extend in the direction of the light trace between the focal plane and the outer surface of the gemstone, and have a shape closely fitting the contour of the inclusion, see the dark hatched areas. If "direction" is defined as the perpendicular to the side through which the inclusion is observed then, when using a narrow depth-of-field apparatus, each direction typically allows measuring through it within a cone with a vertex angle of 10 to 15 degrees. Increasing this angle will result in a decrease of the measurement accuracy due to the astigmatism phenomenon. When a wide depth-of-field apparatus is used (cf. figure 1A), cylinders C1, C2 are created extending in the direction of the light trace from one location of the outer surface to an opposite location on the outer surface and having a shape closely fitting the contour of the inclusion, see the light and dark hatched areas in figure 3. Further, according to a preferred embodiment the phenomenon of astigmatism (the deformation of the width of the ray bundle after refraction) can be taken into account in the calculation, as illustrated in figure 3.

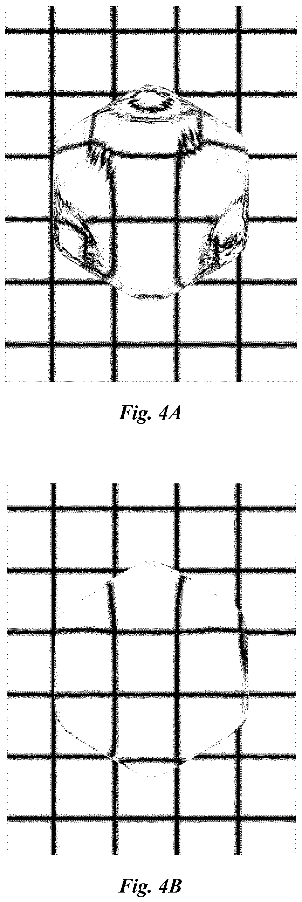

In figures 4A and 4B it is shown how the RI of the solid glassy material influences the image of the stone. In the example the gemstone is a diamond (RI = 2,42) and the RI of the solid glassy material is 2,20 (figure 4A) and 2,37 (figure 4B). It is immediately apparent that a value closer to the RI of the gemstone will facilitate the localizing of the inclusion.

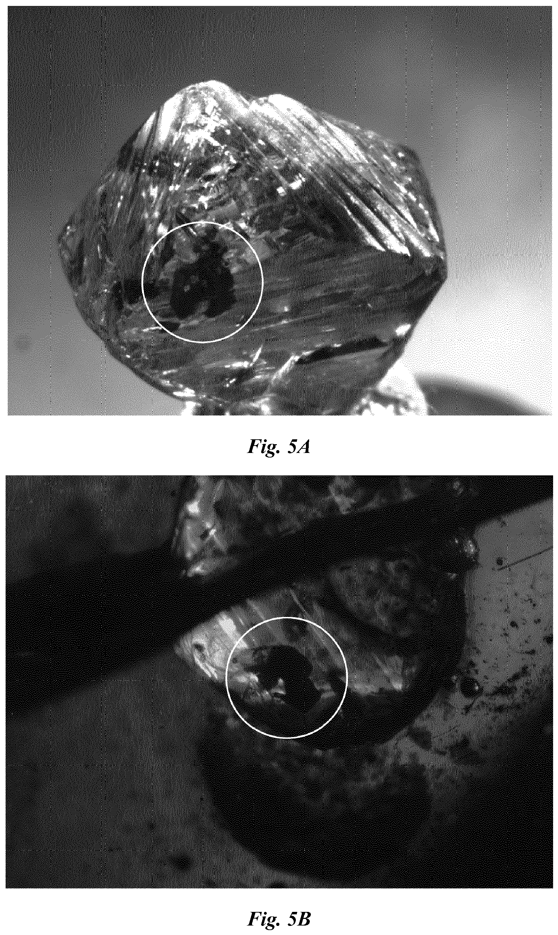

Figure 5B shows how the glassy material helps to detect an inclusion (encircled) which are barely noticeable without any immersion (figure 5A). More in particular, the inclusion is more clearly visible in the photo of figure 5B then in the photo of figure 5A. This shows that the method of the invention is also appropriate to use in the event that RI is not exactly equal to that of the gemstone.

Embodiments of the method of the invention have amongst others, one or more of following advantages over the prior art:
- no need to polish out windows in the gemstone; note that those windows may decrease the dimensions of the potential polished stone;
- possibility to use all the traditional analyzing methods (see methods 1-4 described in the background section), even checking the process by eye;
- the solid block can be give any suitable shape. The solid block provides visibility of all areas of the diamond from one, two or more directions, e.g. the shape of cube provides 3 orthogonally related directions. This is almost impossible in the prior art. There is no limitation to the number of directions since extra facets may be polished anywhere on the solid block;
- the process of imaging of inclusions and other operations does not necessitate difficult operation conditions such as high temperature and does not use toxic substances. It allows the technology to be easily included in the current cutting process;
- the gemstone may be cut whilst remaining in the solid immersion material, together with the solid immersion material. Also, the planning marks may be put on the surface of the solid immersion, e.g. a sawing plane, girdle shape and location, cullet etc. More in particular, it can provide the exact realization of the cutting plan and marking lines on the surface of diamond can be avoided. Further, it is possible to change plan numerous times, putting other marking lines, and this without defacing the diamond;
- compared to the prior art there may be obtained a more rigid and reliable junction of the gemstone and the holder. In that way the holder with gemstone can be more easily transferred to next cutting stations for any one or more of the following operations: sawing, bruting, blocking, etc.
- visible range rays can be used for lighting the solid block with the gemstone inside; in particular, the same wave length range as is used in the known current scanner for 3D- modelling may be used. This allows the use of the same visible range optic devices as currently used in diamond industry for determining inclusions;
- the whole inner volume of the diamond can be observed from several directions, unlike in the prior art where the view is limited to what is seen through the polished windows of the stone;
- the homogeneity of background in images of inclusions is increased, allowing to use an all-automatic algorithm for finding the inclusions in the images;
- possibility to use the currently available scanners and microscopes.

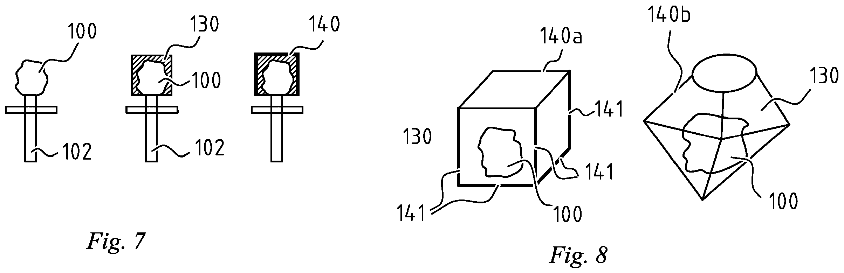

Figure 7 illustrates an embodiment where the solid immersion material 130 is included in a cuvette 140. This cuvette 140 is transparent in a segment of the visible spectrum or in a segment of the infrared spectrum, and is e.g. manufactured of quartz. The analyzing of the gemstone can be done through one or more facets of said cuvette 140 whilst the solid transparent block is in the cuvette. To include the gemstone in the immersion material in the cuvette, a piece of immersion glass is put into the cuvette. Then the assembly of cuvette, immersion material and gemstone is heated in an inert atmosphere such as Argon at a temperature up to 195 -/+30 degrees Celsius depending on the type of immersion glass material selected. It is preferred if the assembly is not cooled down to room temperature but kept at a slightly higher temperature for the analysis of the gemstone in order to avoid cracks in the immersion or cuvette glass. To achieve this, the cuvette may be slightly heated, e.g. up to 35-70 degrees Celsius but below the immersion glass solid/liquid transition temperature. In that way the immersion material becomes more plastic and problems with differences of the temperature expansion coefficient between the cuvette glass and the immersion glass are avoided. Also there a good wetted contact interface is achieved between the immersion material and the cuvette.

Figure 8 illustrates two possible shapes for a cuvette 140a, 140b. The cuvette 140a has a beam shape, and the cuvette 140b has an octahedron shape with an open top. Such a polygonal shape has a plurality of edges, and one or more heating wires 141 may be arranged at or near one or more of said plurality of edges. According to another variant an electrically conductive coating may be provided on the inner and/or outer surface of the cuvette, as disclosed above in the summary of the invention. Further there may be provided electrical contacts to connect the coating to an electrical source such as a current source.

The skilled person will understand that the invention is not limited to the above disclosed embodiments of the invention and that many modifications and further developed features fall within the scope of the invention which is determined by the appended claims.

## Claims

1. Method for analyzing a diamond, typically for locating an inclusion in a diamond, comprising:
- selecting a solid material which is transparent in at least a segment of the visible spectrum or a segment of the infrared spectrum;
- melting or plasticizing said solid material and immersing the diamond in said melted or plasticized material such that the diamond is at least partly covered therein; wherein the solid transparent material has a refractive index RIs and the diamond has a refractive index Rig, wherein RIg - 0,3 < RIs < RIg + 0,3;
- allowing said melted or plasticized material to become solid such that a solid transparent block is obtained containing the diamond; **characterized in that** the method further comprises:
- analyzing the diamond through a surface of the transparent solid block using light rays in the visible spectrum or in the infrared spectrum, wherein the analyzing comprises submerging the solid block in an immersion liquid.

2. Method of claim 1, wherein the solid block is rotated in the immersion liquid and 2D images are obtained from a plurality of different viewing directions to determine a 3D model of the inclusion(s) of the diamond.

3. Method of any one of the previous claims for locating an inclusion in a diamond, wherein the analyzing comprises: visualizing the inclusion using light rays in the visible spectrum through a surface of the transparent block and determining the position of the inclusion using computer means.

4. Method of any of the previous claims, wherein RIg - 0,1 < RIs < RIg + 0,1, and preferably RIg - 0,01 < RIs < RIg + 0,01; and/or wherein the solid material has a transparency for a predetermined segment of visible light, between 5% and 70%, preferably between 30% and 70%, and more preferably between 40% and 70%.

5. Method of any of the previous claims, wherein the solid block is formed or polished with at least a first and a second surface through which an inclusion can be detected, wherein the analyzing comprises:
- observing the inclusion through the first surface of the solid block and obtaining a first 2D image of said inclusion as detected through said first surface;
- observing said inclusion through the second surface of the solid block and obtaining a second 2D image of said inclusion as detected through said second surface;
- determining a first optical cylinder using a first contour of said first image of the inclusion and a second optical cylinder using a second contour of said second image of the inclusion;
- using the intersection of the first and second optical cylinder to determine the location and/or shape of the inclusion.

6. Method of any of the previous claims, wherein before covering the diamond with the transparent material, a 3D model of the outer surface of the diamond is obtained relative to a coordinate system;
wherein after covering the diamond with the transparent material, optionally the solid block is polished; and wherein a 3D model of the outer surface of the solid block is obtained relative to said coordinate system; wherein the analyzing comprises:
- observing the inclusion through at least one surface of the solid block and obtaining at least one 2D image of said inclusion as detected through said at least one surface;
- determining the location of the inclusion using said at least one image of the inclusion, the 3D model of the diamond and the 3D model of the solid block.

7. Method of any of the previous claims, wherein the analyzing comprises: marking the surface of the solid block providing indications for rough processing steps, such as blocking, bruiting, sawing or for fine cutting/polishing steps.

8. Method of any of the previous claims wherein the immersion material is an arsenic-sulphide composition, optionally alloyed with Selenium or Iodine, such as arsenic sulphides (As(X)S(Y)), arsenic sulphide iodides (As(X)S(Y))I(Z)), or arsenic sulphides containing iodine (As(X)S(Y)+(Z)%I), and for example As₂S₉, As₂S₉+3%I, As₂S₁₀, As₂S₅+8%I, As₃₀S₄₆I₂₄, or a combination thereof.

9. Method of any of the previous claims wherein the diamond, whilst being analyzed, is heated up to a temperature below the melting temperature to decrease the inner tensions inside the solid immersion material.

10. Method of any of the previous claims, wherein the diamond is fixed on a holder, and wherein the immersion material is applied whilst the diamond remains fixed on the holder.

11. Method of any of the previous claims, wherein said solid transparent block including the diamond is included in a container, in particular a cuvette, and wherein the analyzing is done through a wall of said container whilst the solid transparent block is in the container, which container is at least transparent in a segment of the visible spectrum or in a segment of the infrared spectrum, wherein the solid immersion material is melted or plasticized in the container such that it adheres to the container.

12. Method of claim 11, wherein the diamond and the solid immersion material are placed in a container, whereupon the melting or plasticizing said solid immersion material and immersing the diamond in said melted or plasticized material takes place such that the diamond is at least partly covered in the solid immersion material in the container, wherein preferably the container remains heated during the cooling of the immersion material.

13. Diamond taken up in a solid block (130) of solid transparent material,
for use in the analyzing step of the method according to any of the previous claims, wherein the solid material is transparent in at least a segment of the visible spectrum and wherein the material of the solid block is an arsenic-sulphide composition, optionally alloyed with selenium or iodine, wherein the solid transparent material has a refractive index RIs and the diamond has a refractive index RIg and wherein RIg - 0,3 < RIs < RIg + 0,3.

14. Diamond taken up in a solid block (130) according to claim 13, wherein the solid material is any one of the following: As₂S₉, As₂S₉+3%I, As₂S₁₀, As₂S₅+8%I, As₃₀S₄₆I₂₄, or a combination thereof.

15. Diamond taken up in a solid block (130) according to any one of claims 13 or 14;
wherein the solid block is polished with at least two flat surfaces to obtain facets for analyzing the diamond; or
wherein the solid block is polished or shaped with a shape similar to the shape of the diamond but with a number of flat surfaces.

## Patentansprüche

1. Verfahren zum Analysieren eines Diamanten, typischerweise zum Lokalisieren eines Einschlusses in einem Diamanten, umfassend:
- Auswählen eines festen Materials, das mindestens in einem Segment des sichtbaren Spektrums oder einem Segment des Infrarotspektrums transparent ist;
- Schmelzen oder Plastifizieren des festen Materials und Eintauchen des Diamanten in das geschmolzene oder plastifizierte Material, derart, dass der Diamant mindestens teilweise darin bedeckt ist; wobei das feste transparente Material einen Brechungsindex RIs aufweist und der Diamant einen Brechungsindex Rig aufweist, wobei RIg - 0,3 < RIs < RIg + 0,3;
- Erstarrenlassen des geschmolzenen oder plastifizierten Materials, um ein fester transparenter Block zu werden, der den Diamanten enthält; **dadurch gekennzeichnet, dass** das Verfahren ferner umfasst:
- Analysieren des Diamanten durch eine Oberfläche des transparenten festen Blocks unter Verwendung von Lichtstrahlen in dem sichtbaren Spektrum oder in dem Infrarotspektrum, wobei das Analysieren das Eintauchen des festen Blocks in eine Immersionsflüssigkeit umfasst.

2. Verfahren nach Anspruch 1, wobei der feste Block in der Immersionsflüssigkeit gedreht wird und 2D-Bilder aus einer Vielzahl von unterschiedlichen Betrachtungsrichtungen erhalten werden, um ein 3D-Modell der Einschlusses/der Einschlüsse des Diamanten zu bestimmen.

3. Verfahren nach einem der vorstehenden Ansprüche zum Lokalisieren eines Einschlusses in einem Diamanten, wobei die Analyse umfasst: Visualisieren des Einschlusses unter Verwendung von Lichtstrahlen in dem sichtbaren Spektrum durch eine Oberfläche des transparenten Blocks und Bestimmen der Position des Einschlusses unter Verwendung von Computermitteln.

4. Verfahren nach einem der vorstehenden Ansprüche, wobei RIg - 0,1 < RIs < RIg + 0,1 und vorzugsweise RIg - 0,01 < RIs < RIg + 0,01; und/oder wobei das feste Material eine Transparenz für ein vorherbestimmtes Segment des sichtbaren Lichts zwischen 5 % und 70 %, vorzugsweise zwischen 30 % und 70 % und mehr bevorzugt zwischen 40 % und 70 % aufweist.

5. Verfahren nach einem der vorstehenden Ansprüche, wobei der feste Block mit mindestens einer ersten und einer zweiten Oberfläche ausgebildet oder poliert wird, durch die ein Einschluss erkannt werden kann, wobei das Analysieren umfasst:
- Beobachten des Einschlusses durch die erste Oberfläche des festen Blocks und Erhalten eines ersten 2D-Bilds des Einschlusses, wie er durch die erste Oberfläche erkannt wird;
- Beobachten des Einschlusses durch die zweite Oberfläche des festen Blocks und Erhalten eines zweiten 2D-Bilds des Einschlusses, wie er durch die zweite Oberfläche erkannt wird;
- Bestimmen eines ersten optischen Zylinders unter Verwendung einer ersten Kontur des ersten Bilds des Einschlusses und eines zweiten optischen Zylinders unter Verwendung einer zweiten Kontur des zweiten Bilds des Einschlusses;
- Verwenden des Schnittpunkts des ersten und zweiten optischen Zylinders, um die Stelle und/oder Form des Einschlusses zu bestimmen.

6. Verfahren nach einem der vorstehenden Ansprüche, wobei vor dem Bedecken des Diamanten mit dem transparenten Material ein 3D-Modell der Außenoberfläche des Diamanten relativ zu einem Koordinatensystem erhalten wird;
wobei nach dem Bedecken des Diamanten mit dem transparenten Material der feste Block optional poliert wird; und wobei ein 3D-Modell der Außenoberfläche des festen Blocks relativ zu dem Koordinatensystem erhalten wird; wobei das Analysieren umfasst:
- Beobachten des Einschlusses durch mindestens eine Oberfläche des festen Blocks und Erhalten von mindestens einem 2D-Bild des Einschlusses, wie er durch diese mindestens eine Oberfläche erkannt wird;
- Bestimmen der Stelle des Einschlusses unter Verwendung des mindestens einen Bilds des Einschlusses, des 3D-Modells des Diamanten und des 3D-Modells des festen Blocks.

7. Verfahren nach einem der vorstehenden Ansprüche, wobei das Analysieren umfasst:
Markieren der Oberfläche des festen Blocks, wobei Hinweise für grobe Verarbeitungsschritte, wie Vorschmieden, Brechen, Sägen oder für feine Schneide-/Polierschritte, bereitgestellt werden.

8. Verfahren nach einem der vorstehenden Ansprüche, wobei das Immersionsmaterial eine Arsensulfid-Zusammensetzung ist, die optional mit Selen oder Jod legiert ist, wie Arsensulfide (As(X)S(Y)), Arsensulfidiodide (As(X)S(Y))I(Z)) oder Arsensulfide, die Jod (As(X)S(Y)+(Z)%I) enthalten, und beispielsweise As₂S₉, As₂S₉+3 %I, AS₂S₁₀, As₂S₅+8 %I, AS₃₀S₄₆I₂₄ oder eine Kombination davon.

9. Verfahren nach einem der vorstehenden Ansprüche, wobei der Diamant während des Analysierens auf eine Temperatur unterhalb der Schmelztemperatur erwärmt wird, um die inneren Spannungen im Inneren des festen Immersionsmaterial zu verringern.

10. Verfahren nach einem der vorstehenden Ansprüche, wobei der Diamant auf einem Halter befestigt ist, und wobei das Immersionsmaterial aufgetragen wird, während der Diamant auf dem Halter befestigt bleibt.

11. Verfahren nach einem der vorstehenden Ansprüche, wobei der feste transparente Block, einschließlich des Diamanten, in einem Behälter, insbesondere einer Küvette, eingeschlossen ist, und wobei das Analysieren durch eine Wand des Behälters erfolgt, während der feste transparente Block in dem Behälter ist, wobei
der Behälter mindestens in einem Segment des sichtbaren Spektrums oder in einem Segment des Infrarotspektrums transparent ist, wobei das feste Immersionsmaterial in dem Behälter geschmolzen oder plastifiziert wird, derart, dass es an dem Behälter haftet.

12. Verfahren nach Anspruch 11, wobei der Diamant und das feste Immersionsmaterial in einen Behälter platziert werden, woraufhin das Schmelzen oder Plastifizieren des festen Immersionsmaterials und das Eintauchen des Diamanten in das geschmolzene oder plastifizierte Material erfolgt, derart, dass der Diamant mindestens teilweise mit dem festen Immersionsmaterial in dem Behälter bedeckt ist, wobei vorzugsweise der Behälter während des Abkühlens des Immersionsmaterials erwärmt bleibt.

13. Diamant, aufgenommen in einem festen Block (130) aus festem transparentem Material, zur Verwendung in dem Analyseschritt des Verfahrens gemäß einem der vorstehenden Ansprüche, wobei das feste Material in mindestens einem Segment des sichtbaren Spektrums transparent ist, und wobei das Material des festen Blocks eine Arsensulfid-Zusammensetzung ist, die optional mit Selen oder Jod legiert ist, wobei das feste transparente Material einen Brechungsindex RIs aufweist und der Diamant einen Brechungsindex RIg aufweist und wobei RIg - 0,3 < RIs < RIg + 0,3.

14. Diamant, aufgenommen in einem festen Block (130) nach Anspruch 13, wobei das feste Material ein beliebiges der folgenden ist: As₂S₉, As₂S₉+3 %I, AS₂S₁₀, As₂S₅+8 %I, AS₃₀S₄₆I₂₄ oder eine Kombination davon.

15. Diamant, aufgenommen in einem festen Block (130) nach einem der Ansprüche 13 oder 14;
wobei der feste Block mit mindestens zwei flachen Oberflächen poliert wird, um Facetten für eine Analyse des Diamanten zu erhalten; oder
wobei der feste Block mit einer Form, die der Form des Diamanten ähnelt, jedoch mit mehreren flachen Oberflächen, poliert oder geformt wird.

## Revendications

1. Procédé d'analyse d'un diamant, généralement pour localiser une inclusion dans un diamant, comprenant :
- la sélection d'un matériau transparent solide dans au moins un segment du spectre visible ou un segment du spectre infrarouge ;
- la fonte ou plastification dudit matériau solide et l'immersion du diamant dans ledit matériau fondu ou plastifié de manière à ce que le diamant soit au moins partiellement recouvert par celui-ci ; dans lequel le matériau transparent solide a un indice de réfraction RIs et le diamant a un indice de réfraction Rig, dans lequel RIg - 0,3 < RIs < RIg + 0,3 ;
- la possibilité pour le matériau fondu ou plastifié de devenir solide de manière à obtenir un bloc solide et transparent contenant le diamant ; **caractérisé en ce que** le procédé comprend en outre :
- l'analyse du diamant à travers une surface du bloc solide transparent à l'aide de rayons lumineux dans le spectre visible ou dans le spectre infrarouge, dans lequel l'analyse comprend l'immersion du bloc solide dans un liquide d'immersion.

2. Procédé selon la revendication 1, dans lequel le bloc solide est mis en rotation dans le liquide d'immersion et des images 2D sont obtenues à partir d'une pluralité de directions d'observation différentes afin de déterminer un modèle 3D de la ou des inclusions du diamant.

3. Procédé selon l'une quelconque des revendications précédentes pour localiser une inclusion dans un diamant, dans lequel l'analyse comprend : la visualisation de l'inclusion à l'aide de rayons lumineux dans le spectre visible à travers une surface du bloc transparent et la détermination de la position de l'inclusion à l'aide de moyens informatiques.

4. Procédé selon l'une quelconque des revendications précédentes, dans lequel RIg - 0,1 < RIs < RIg + 0,1, et de préférence RIg - 0,01 < RIs < RIg + 0,01 ; et/ou dans lequel le matériau solide a une transparence pour un segment prédéterminé de lumière visible, comprise entre 5 % et 70 %, de préférence entre 30 % et 70 %, et plus préférablement entre 40 % et 70 %.

5. Procédé selon l'une quelconque des revendications précédentes, dans lequel le bloc solide est formé ou poli avec au moins une première et une seconde surface à travers lesquelles une inclusion peut être détectée, dans lequel l'analyse comprend :
- l'observation de l'inclusion à travers la première surface du bloc solide et l'obtention d'une première image 2D de ladite inclusion telle que détectée à travers ladite première surface ;
- l'observation de ladite inclusion à travers la seconde surface du bloc solide et l'obtention d'une seconde image 2D de ladite inclusion telle que détectée à travers ladite seconde surface ;
- la détermination d'un premier cylindre optique à l'aide d'un premier contour de ladite première image de l'inclusion et un second cylindre optique à l'aide d'un second contour de ladite seconde image de l'inclusion ;
- l'utilisation de l'intersection des premier et second cylindres optiques pour déterminer l'emplacement et/ou la forme de l'inclusion.

6. Procédé selon l'une quelconque des revendications précédentes, dans lequel, avant de recouvrir le diamant avec le matériau transparent, un modèle 3D de la surface extérieure du diamant est obtenu par rapport à un système de coordonnées ;
dans lequel, après avoir recouvert le diamant avec le matériau transparent, éventuellement le bloc solide est poli ; et dans lequel un modèle 3D de la surface extérieure du bloc solide est obtenu par rapport audit système de coordonnées ; dans lequel l'analyse comprend :
- l'observation de l'inclusion à travers au moins une surface du bloc solide et l'obtention d'au moins une image 2D de ladite inclusion telle que détectée à travers au moins une surface ;
- la détermination de l'emplacement de l'inclusion à l'aide de ladite au moins une image de l'inclusion, du modèle 3D du diamant et du modèle 3D du bloc solide.

7. Procédé selon l'une quelconque des revendications précédentes, dans lequel l'analyse comprend : le marquage de la surface du bloc solide fournissant des indications pour des étapes de traitement brut, telles que le blocage, le broyage, le sciage ou pour des étapes de découpage fin/polissage.

8. Procédé selon l'une quelconque des revendications précédentes, dans lequel le matériau d'immersion est une composition d'arsenic-sulfure, éventuellement alliée avec du sélénium ou de l'iode, telle que les sulfures d'arsenic (As(X)S(Y)), les iodures de sulfure d'arsenic (As(X)S(Y))I(Z)), ou les sulfures d'arsenic contenant de l'iode (As(X)S(Y) + (Z) %I), et par exemple As₂S₉, As₂S₉ + 3 %I, AS₂S₁₀, As₂S₅ + 8 %I, As₃₀S₄₆I₂₄, ou une combinaison de ceux-ci.

9. Procédé selon l'une quelconque des revendications précédentes, dans lequel le diamant, pendant son analyse, est chauffé à une température inférieure à la température de fusion afin de réduire les tensions internes à l'intérieur du matériau d'immersion solide.

10. Procédé selon l'une quelconque des revendications précédentes, dans lequel le diamant est fixé sur un support, et dans lequel le matériau d'immersion est appliqué alors que le diamant reste fixé sur le support.

11. Procédé selon l'une quelconque des revendications précédentes, dans lequel ledit bloc solide transparent comportant le diamant est inclus dans un récipient, en particulier une cuvette, et dans lequel l'analyse est effectuée à travers une paroi dudit récipient alors que le bloc solide transparent se trouve dans le récipient, lequel récipient est au moins transparent dans un segment du spectre visible ou dans un segment du spectre infrarouge, dans lequel le matériau d'immersion solide est fondu ou plastifié dans le récipient de sorte qu'il adhère au récipient.

12. Procédé selon la revendication 11, dans lequel le diamant et le matériau d'immersion solide sont placés dans un récipient, après quoi la fusion ou la plastification dudit matériau d'immersion solide et l'immersion du diamant dans ledit matériau fondu ou plastifié s'effectuent de manière à ce que le diamant soit au moins partiellement recouvert par le matériau d'immersion solide dans le récipient, dans lequel de préférence le récipient reste chauffé pendant le refroidissement du matériau d'immersion.

13. Diamant pris dans un bloc solide (130) de matériau transparent solide, destiné à être utilisé dans l'étape d'analyse du procédé selon l'une quelconque des revendications précédentes, dans lequel le matériau solide est transparent dans au moins un segment du spectre visible et dans lequel le matériau du bloc solide est une composition d'arsenic-sulfure, éventuellement alliée avec du sélénium ou de l'iode, dans lequel le matériau transparent solide a un indice de réfraction RIs et le diamant a un indice de réfraction RIg et dans lequel RIg - 0,3 < RIs < RIg + 0,3.

14. Diamant pris dans un bloc solide (130) selon la revendication 13, dans lequel le matériau solide est l'un quelconque de ce qui suit : As₂S₉, As₂S₉ + 3 %I, AS₂S₁₀, As₂S₅ + 8 %I, As₃₀S₄₆I₂₄, ou une combinaison de ceux-ci.

15. Diamant pris dans un bloc solide (130) selon l'une quelconque des revendications 13 ou 14 ;
dans lequel le bloc solide est poli avec au moins deux surfaces planes afin d'obtenir des facettes pour l'analyse du diamant ; ou
dans lequel le bloc solide est poli ou façonné avec une forme similaire à la forme du diamant, mais avec un certain nombre de surfaces planes.
